# EUROPÄISCHE PATENTSCHRIFT

(11) **EP 2 930 050 B1**
(45) Veröffentlichungstag und Bekanntmachung des Hinweises auf die Patenterteilung: **07.08.2019**
(21) Anmeldenummer: 14163888.2
(22) Anmeldetag: 08.04.2014
(51) Int. Cl.: B60K 37/06, G06F 3/0482

(54) **Verfahren und Vorrichtung zum Anzeigen von Informationen in einem Fahrzeug**
Method and device for displaying information in a vehicle
Procédé et dispositif d'affichage d'informations dans un véhicule

(43) Veröffentlichungstag der Anmeldung: 14.10.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE)

(56) Entgegenhaltungen:
- DE-A1-102007 039 442
- DE-A1-102011 116 120

## Beschreibung

Die vorliegende Erfindung betrifft ein Verfahren und eine Vorrichtung zum Anzeigen von Informationen in einem Fahrzeug.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge häufig Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Die DE 10 2008 050 803 A1 beschreibt ein Verfahren zum Anzeigen von Informationen in einem Fahrzeug, bei dem eine Teilmenge einer Gesamtinformation über einen Bildlauf gesteuert werden kann.

Die WO 2011/042355 A1 beschreibt ein Verfahren zur Integration einer Komponente in ein Informationssystem eines Fahrzeugs. Dabei wird die Integration der Komponente bezüglich der Eingabe und/oder Ausgabe von Informationen durch den Nutzer personalisiert bezüglich eines Benutzers der Komponente vorgenommen.

Die DE 10 2007 042 289 A1 beschreibt ein Verfahren zur Wiedergabe von Multimediainformationen für den mobilen Einsatz innerhalb oder außerhalb eines Fahrzeugs.

Dabei können Multimediainformationen in Kategorien eingeteilt und die Multimediainformationen einzelner Kategorien können aufgelistet werden.

Die Darstellung von Information in einem Fahrzeug erfolgt vielfach dadurch, dass Informationen auf der Anzeigefläche in dem Fahrzeug angezeigt werden und der Nutzer die angezeigten Informationen verändern kann. Es ist weiterhin vorteilhaft, wenn der Fahrer des Fahrzeugs, die angezeigten Informationen verändern kann, ohne dass er dazu viel Aufmerksamkeit vom Straßengeschehen nehmen muss.

Aus der DE 10 2011 116120 A1 ist der Oberbegriff des Anspruchs 1 bekannt.

Es ist daher Aufgabe der vorliegenden Erfindung, ein Verfahren und eine Vorrichtung bereitzustellen, mit denen auf intuitive und schnelle Art und Weise eine Veränderung einer Anzeige von Informationen erfolgen kann.

Diese Aufgabe wird durch ein Verfahren nach Anspruch 1 und eine Vorrichtung nach Anspruch 9 gelöst. Vorteilhafte Ausgestaltungen und Weiterbildungen sind Gegenstände der abhängigen Ansprüche.

Bei dem erfindungsgemäßen Verfahren wird zumindest ein erstes Objekt zur Wiedergabe von Informationen auf einer Anzeigefläche graphisch dargestellt wird, wobei das erste Objekt einem ersten Thema zugeordnet ist, angrenzend an das erste Objekt zumindest teilweise ein zweites Objekt zur Wiedergabe von Informationen angezeigt wird, welches einem zweiten Thema zugeordnet ist,erfasst wird, wenn auf der Anzeigefläche ein Themenwechsel von dem ersten Thema zu dem zweiten Thema herbeigeführt wird, und in Abhängigkeit davon, ob ein Themenwechsel erfasst worden ist, das zweite Objekt zur Wiedergabe von Informationen vollständig auf der Anzeigefläche graphisch dargestellt wird, dadurch gekennzeichnet, dass das erste Objekt mehrere erste Widget-Objekte umfasst, wobei die ersten Widget-Objekte dem ersten Thema zugeordnet sind, und das zweite Objekt mehrere zweite Widget-Objekte umfasst, wobei die zweiten Widget-Objekte dem zweiten Thema zugeordnet sind, wobei das erste Thema einem ersten Betriebsmodus des Fahrzeugs und das zweite Thema einem zweiten Betriebsmodus des Fahrzeugs zugeordnet wird, ermittelt wird, ob das Fahrzeug von dem ersten in den zweiten Betriebsmodus gewechselt hat, und, wenn der Betriebsmodus gewechselt hat, der Themenwechsel automatisch herbeigeführt wird.

Das erste Objekt und das zweite Objekt sind einem Thema zugeordnet. Dies bedeutet, dass die in dem Objekt wiedergegebenen Informationen zu einem gleichen Themengebiet angezeigt werden. Dabei kann der Nutzer selbst bestimmen, welche Informationen für ihn zum selben Themengebiet gehören. Dabei können auch Informationen, die auf den ersten Blick unterschiedlichen Themengebieten zugehörig sind, zu einem Thema zusammengefasst werden. Beispielsweise können zu dem Thema "Reise" Informationen zur Reiseroute angezeigt werden. Gleichzeitig können aber auch Informationen zu einer Medienwiedergabe angezeigt werden. Reiseroute und Medienwiedergabe scheinen jedoch auf den ersten Blick unterschiedlichen Themengebieten anzugehören. Hat der Nutzer jedoch eine Mediathek extra für die Reise erstellt, so kann die Medienwiedergabe auch dem Thema Reise angehören.

Weiterhin kann auch die Wiedergabe eines bestimmten Radiosenders oder die Wiedergabe von Musik im Allgemeinen zum Thema "Reise" gehören, wenn es der Nutzer so definiert hat.

Bei dem ersten und dem zweiten Objekt kann es sich beispielsweise um flächige Objekte handeln. Dabei kann das erste Objekt beispielweise nahtlos in das zweite Objekt übergehen. Dadurch können sogenannte Themenbänder auf der Anzeigefläche angezeigt werden.

Vorteilhafterweise wird dem Nutzer dadurch, dass das zweite Objekt zumindest teilweise auf der Anzeigefläche angrenzend an das erste Objekt angezeigt wird, dargestellt, dass er überhaupt das Thema wechseln kann.

Insbesondere wird eine Bedienaktion erfasst, wobei der Themenwechsel in Abhängigkeit von der Bedienaktion herbeigeführt wird. Dadurch kann der Nutzer selbst das Thema wechseln, wenn es die Fahrsituation erfordert. Legt der Fahrer beispielsweise während einer Reise eine Pause ein, kann er die Anzeige vom Thema "Reise" auf das Thema "Pause" verändern.

Weiterhin werden auf der Anzeigefläche zumindest zwei betätigbare Schaltelemente angezeigt, wobei jedes Schaltelement einem der zwei Themen zugeordnet ist. Die Bedienaktion wird für das Schaltelement erfasst, welches dem zweiten Thema zugeordnet ist. Dadurch kann auf einfache und intuitive Art und Weise ein Themenwechsel vom Nutzer herbeigeführt werden.

Unter einem *Schaltelement* wird im Sinne der Erfindung ein Steuerelement einer graphischen Benutzerschnittstelle verstanden. Ein Schaltelement unterscheidet sich von Elementen und Flächen zur reinen Informationsanzeige, so genannten Anzeigeelementen, darin, dass sie auswählbar sind und ein Hinweis auf die Funktion des Schaltelements angezeigt wird. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbare Anzeigefläche erzeugt und von dieser angezeigt werden.

Weiterhin kann eine Bedienaktion erfasst werden, mit welcher das zumindest teilweise angezeigte zweite Objekt ausgewählt wird, wobei mit der Bedienaktion der Themenwechsel herbeigeführt wird. Handelt es sich bei der Anzeigefläche um einen sogenannten Touch-Screen, kann der Nutzer dadurch den Themenwechsel herbeiführen, dass er das zumindest teilweise angezeigte zweite Objekt berührt. Dies stellt eine besonders einfache Art und Weise dar, einen Themenwechsel herbeizuführen. Es kann insbesondere zu beiden Seiten des ersten Objekts ein zweites Objekts angrenzen, wobei die zweiten Objekte wiederum unterschiedlichen Themen zugeordnet sein können. Die zweiten Objekte können dabei zunächst ausgegraut dargestellt werden, so dass lediglich das erste Objekt hervorgehoben dargestellt wird.

In einer weiteren Ausgestaltung wird eine Bedienaktion erfasst. Die Bedienaktion umfasst eine Wischgeste, wobei die Richtung der Wischgeste erfasst wird. In Abhängigkeit von der erfassten Richtung wird ein Bildlauf auf der Anzeigefläche erzeugt, bei dem das erste Objekt in die erfasste Richtung aus der Anzeigefläche hinausgeschoben wird und das zweite Objekt in die Anzeigefläche hineingeschoben wird, wobei der Themenwechsel herbeigeführt wird, wenn das zweite Objekt eine bestimmte Position auf der Anzeigefläche erreicht hat. Der Themenwechsel kann also ganz einfach durch eine Wischgeste herbeigeführt werden. Dabei springt die Anzeige auf der Anzeigefläche zu dem zweiten Objekt, wenn das zweite Objekt beispielsweise über eine unsichtbare Grenze auf der Anzeigefläche in die Anzeigefläche hinein geschoben wurde.

In einer anderen Ausgestaltung wird eine Bedienaktion erfasst. Wenn die Bedienaktion erfasst wurde, wird das erste Objekt perspektivisch oder dreidimensional um eine erste Achse um einen ersten Schwenkwinkel geschwenkt angezeigt, wobei das zweite Objekt perspektivisch oder dreidimensional um eine zweite Achse um einen zweiten Schwenkwinkel geschwenkt angezeigt wird. Durch das Schwenken des ersten Objekts kann sich zwar gegebenenfalls die von dem ersten Objekt eingenommene Fläche auf dem Display verkleinern, dafür kann jedoch die Fläche für das zumindest teilweise angezeigte zweite Objekt vergrößert werden. Dadurch kann insgesamt eine größere Menge an Informationen auf der Anzeigefläche angezeigt werden. Die erste und zweite Achse können beispielsweise zusammenfallen. Weiterhin können auch der erste und zweite Schwenkwinkel den gleichen Wert aufweisen. Dadurch geht das erste Objekt dann nahtlos in das zweite Objekt über.

Die erste und zweite Achse können jedoch auch getrennt voneinander auf der Anzeigefläche angeordnet sein. Auch der zweite Schwenkwinkel kann sich von dem ersten Schwenkwinkel unterscheiden. Dann kann das zweite Objekt von dem ersten Objekt abgesetzt angezeigt werden und ist somit für den Nutzer klar erkennbar.

Unter einem *Widget-Objekt* wird im Sinne der Erfindung ein Objekt verstanden, welches graphisch auf der Anzeigefläche dargestellt wird und welches einer Anwendung zugeordnet ist, die z. B. von einer Fahrzeugeinrichtung ausgeführt wird. Ein Widget-Objekt kann insbesondere in einem kleinen Bereich der Anzeigefläche Informationen einer Fahrzeugeinrichtung anzeigen, die laufend aktualisiert werden. Beispielsweise können von dem Widget-Objekt Routeninformationen des Navigationssystems, aktuelle Meldungen zum Wetter, zum Straßenzustand und zum Verkehrszustand angezeigt werden sowie Informationen zu Multimedia-Einrichtungen des Fahrzeugs. Die Widget-Objekte werden insbesondere unabhängig vom weiteren Anzeigeinhalt der Anzeigefläche dargestellt. Ist das Anzeigefenster ein Widget-Objekt, können auch die graphischen Objekte in dem Anzeigefenster Widget-Objekte sein. Dabei hat der Nutzer über das Anzeigefenster Zugang zu anderen Widget-Objekten.

In einer weiteren Ausgestaltung wird auf der Anzeigefläche für jedes der Objekte jeweils ein Schaltelement in einer schematischen Darstellung der Objekte angezeigt. Dabei wird das Schaltelement für das erste Objekt hervorgehoben dargestellt. Es wird eine Bedienaktion erfasst, mit welcher das Schaltelement für das zweite Objekt über die schematische Darstellung ausgewählt wird. Es wird der Themenwechsel herbeigeführt und das ausgewählte Schaltelement in der schematischen Darstellung wird hervorgehoben dargestellt. Dadurch erhält der Nutzer insbesondere eine Übersicht darüber, wie viele Objekte zu wie vielen unterschiedlichen Themen zur Verfügung stehen. Weiterhin wird ihm angezeigt, wie das momentan auf der Anzeigefläche angezeigte Objekt in die Anzahl der vorhandene Objekte eingeordnet werden kann.

Insbesondere stellt das erste Objekt eine erste Hauptanzeige der Anzeigefläche und das zweite Objekt eine zweite Hauptanzeige der Anzeigefläche dar. Eine Hauptanzeige ist dabei eine Anzeige, die insbesondere dann angezeigt wird, wenn eine Anzeigevorrichtung, zu welcher die Anzeigefläche gehört, eingeschaltet wird. Dabei kann die Hauptanzeige vom Nutzer selbst konfiguriert werden. Insbesondere der Nutzer für unterschiedliche Themen unterschiedliche Hauptanzeigen konfigurieren. Dabei wird dann bei einem Themenwechsel die zugehörige Hauptanzeige angezeigt. Eine Hauptanzeige wird im Allgemeinen auch als Home-Screen bezeichnet.

Ferner betrifft die Erfindung eine Vorrichtung zum Anzeigen von Informationen in einem Fahrzeug, gemäß Anspruch 9.

Die erfindungsgemäße Vorrichtung ist insbesondere so ausgestaltet, dass sie die vorstehend beschriebenen Verfahrensschritte teilweise oder vollständig ausführen kann.

Insbesondere umfasst die Erfassungseinheit eine berührungsempfindliche Oberfläche, die auf der Anzeigefläche angeordnet ist, wobei mittels der berührungsempfindlichen Oberfläche eine Bedienaktion erfassbar ist und mittels welcher der Themenwechsel herbeiführbar ist. Die Anzeigevorrichtung stellt also insbesondere einen sogenannten Touch-Screen bereit, welcher über Berührungen des Nutzers bedient werden kann.

In einer Ausgestaltung der erfindungsgemäßen Vorrichtung ist dem ersten Thema ein erster Betriebsmodus und dem zweiten Thema ein zweiter Betriebsmodus des Fahrzeugs zuordenbar. Die Vorrichtung umfasst dann ferner eine Ermittlungseinheit, mit welcher ermittelbar ist, ob das Fahrzeug von dem ersten Betriebsmodus in den zweiten Betriebsmodus wechselt. Das zweite Objekt ist dann in Abhängigkeit davon anzeigbar, ob der Betriebsmodus von dem ersten in den zweiten Betriebsmodus gewechselt hat. Die Vorrichtung kann also auch automatisch einen Themenwechsel auf der Anzeigefläche herbeiführen.

Weiterhin kann die Steuereinheit mit Fahrzeugfunktionen koppelbar sein, wobei in den Objekten Widget-Objekte anzeigbar sind, welche Informationen zu den Fahrzeugfunktionen bereitstellen.

Ferner betrifft die Erfindung ein Fahrzeug, das eine erfindungsgemäße Vorrichtung umfasst.

Im Folgenden wird die Erfindung anhand von Ausführungsbeispielen mit Bezug zu den Zeichnungen erläutert.
- Figur 1: zeigt ein Ausführungsbeispiel der erfindungsgemäßen Vorrichtung,
- Figur 2: zeigt ein Fahrzeug mit dem Ausführungsbeispiel der erfindungsgemäßen Vorrichtung ,
- Figuren 3 bis 6: zeigen Anzeigen auf einer Anzeigefläche, wie sie von verschiedenen Ausführungsbeispielen des Verfahrens erzeugt werden können, und
- Figur 7: zeigt Beispiele für die Ausgestaltung von Widget-Objekten.

Die in den Figuren enthaltenen englischsprachigen Wörter stellen in dieser Anmeldung graphische Symbole und Eigennamen dar.

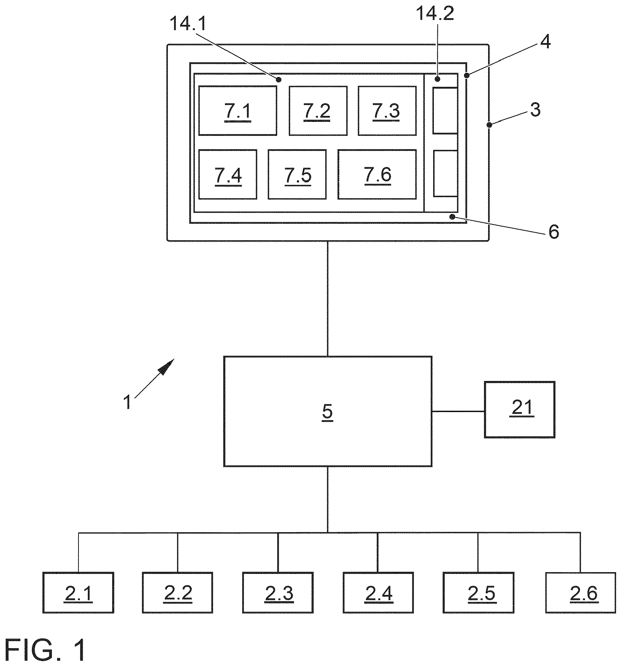

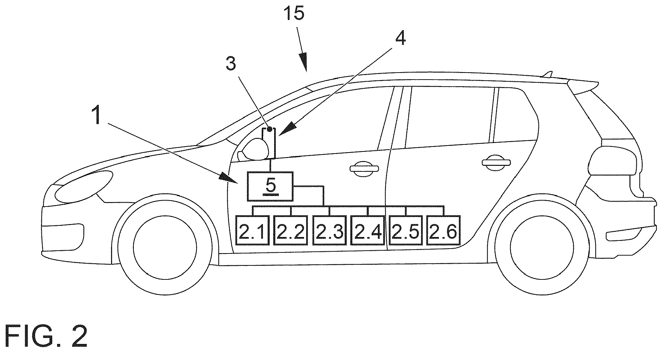

Mit Bezug zu den Figuren 1 und 2 wird ein erstes Ausführungsbeispiel der erfindungsgemäßen Vorrichtung 1 sowie eine Anordnung der erfindungsgemäßen Vorrichtung 1 in einem Fahrzeug 15 erläutert:
Die Vorrichtung 1 umfasst dabei eine Anzeigevorrichtung 3 mit einer Anzeigefläche 4.

Auf der Anzeigefläche 4 ist eine berührungsempfindliche Oberfläche als Erfassungseinheit 6 vorgesehen, über welche Bedienaktionen des Nutzers erfasst werden können. Es wird somit ein sogenannter Touchscreen bereitgestellt.

Die Anzeigevorrichtung 3 ist mit einer Steuereinheit 5 gekoppelt. Mittels der Steuereinheit 5 können Berührungen auf der berührungsempfindlichen Oberfläche ortsaufgelöst erfasst und in Abhängigkeit von der Anzeige auf der Anzeigefläche 4 in Steuersignale umgesetzt werden. Ferner können von der Steuereinheit 5 Graphikdaten erzeugt werden, die mittels der Anzeigevorrichtung 3 angezeigt werden können.

Auf der Anzeigefläche 4 wird weiterhin ein erstes Objekt 14.1 angezeigt, welches Informationen zu Fahrzeugfunktionen 2.1 bis 2.6, welche mit der Vorrichtung 1 über die Steuereinheit 5 gekoppelt sind, in Form von Widget-Objekten 7.1 bis 7.6, enthält. Das Widget-Objekt 7.1 enthält dabei Informationen zur Fahrzeugfunktion 2.1, welche ein Navigationsfunktion ist. Das Widget-Objekt 7.1 zeigt beispielsweise eine vom Fahrer befahrene Route an. Die Fahrzeugfunktion 2.2 stellt eine Klimafunktion bereit, wobei das Widget-Objekt 7.2 die vom Nutzer vorgenommenen Einstellungen zur Klimatisierung im Fahrzeug 15 anzeigt. Über die Fahrzeugfunktion 2.3 können Wetterdaten abgerufen werden. Diese werden im Widget-Objekt 7.3 angezeigt. Die Fahrzeugfunktionen 2.4 und 2.5 können Daten über den Zustand des Fahrzeugs 15 abrufen, welche in den Widget-Objekten 7.4 und 7.5 wiedergegeben werden. Die Fahrzeugfunktion 2.6 stellt ein Multimediafunktion des Fahrzeugs 15 bereit, wobei das Widget-Objekt 7.6 einen momentan abgespielten Musiktitel anzeigt. Angrenzend an das erste Objekt 14.1 wird ein zweites Objekt 14.2 teilweise angezeigt.

Die Objekte 14.1 und 14.2 stellen dabei insbesondere Hauptanzeigen der Anzeigefläche 4 dar. Die Hauptanzeigen werden im folgenden als Home-Screen bezeichnet. Dabei sind die Widget-Objekte 7.1 bis 7.6 des ersten Objekts 14.1 einem ersten Thema und Widget-Objekte, die in dem zweiten Objekt 14.2 angezeigt werden, einem zweiten Thema zugeordnet.

Die Vorrichtung 1 kann weiterhin eine Ermittlungseinheit 21 umfassen, welche den Betriebsmodus des Fahrzeug 15 ständig ermittelt. Dabei sind verscheiden Betriebsmodi verschiedenen Themen der Home-Screens zugeordnet. Weiterhin kann die Ermittlungseinheit 21 ein Steuersignal an die Steuereinheit 5 senden, wenn sie einen Wechsel im Betriebsmodus detektiert. Die Steuereinheit 5 kann dann die Anzeigefläche 4 automatisch derart ansteuern, dass ein Themenwechsel auf der Anzeigefläche 4 herbeigeführt wird.

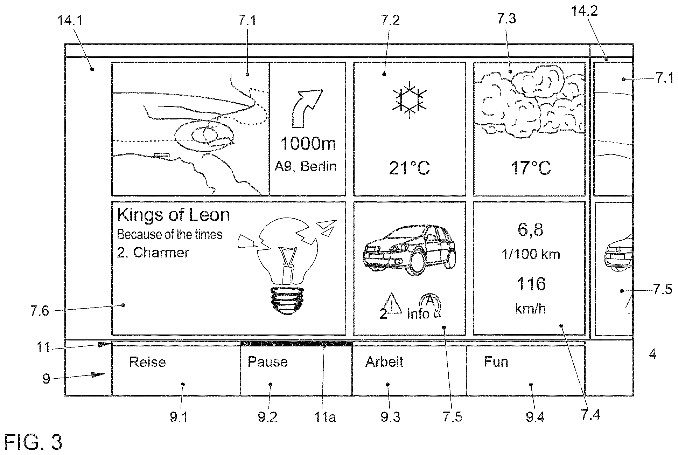

Mit Bezug zu Figur 3 wird ein Beispiel einer Anzeige erläutert, wie sie von einem Ausführungsbeispiel des erfindungsgemäßen Verfahrens auf der Anzeigefläche 4 erzeugt werden kann.

Das Objekt 14.1, welches einem ersten Home-Screen der Anzeigefläche 4 entspricht, ist dabei einem bestimmten Thema, beispielsweise dem Thema "Reise" zugeordnet. Dabei hat sich der Nutzer die Widget-Objekte 7.1 bis 7.6, welche in dem Objekt 14.1 angezeigt werden, selbst dem Thema "Reise" zugeordnet. Im Widget-Objekt 7.1 wird die Route, welcher der Nutzer auf seiner Reise befährt, angezeigt. Zudem werden Einstellungen der Klimafunktion im Widget-Objekt 7.2, Wetterdaten beispielsweise vom Zielort im Widget-Objekt 7.3, Benzinverbrauch und Durchschnittsgeschwindigkeit im Widget-Objekt 7.4, Informationen zum Fahrzeugzustand im Widget-Objekt 7.5 und ein abgespielter Musiktitel einer Liste von extra für die Reise zusammengestellte Musiktiteln im Widget-Objekt 7.6 angezeigt.

Rechts angrenzend an das erste Objekt 14.1 wird ein zweites Objekt 14.2 angezeigt. Dabei stellt das zweite Objekt 14.2 den Home-Screen zum Thema "Pause" bereit. Dabei grenzen insbesondere die Widget-Objekte 7.1 und 7.5 des zweiten Objekts 14.2 an die Widget-Objekte 7.3 und 7.4 des ersten Objekts 14.1 an. Die Widget-Objekte 7.1 und 7.5 des zweiten Objekts 14.2 entsprechen dabei den Widget-Objekten 7.1 und 7.5 des ersten Objekts 14.1.

Weiterhin wird auf der Anzeigefläche 4 ein Bereich 9 angezeigt, welcher wiederum in die Teilbereiche, welche als Schaltelemente 9.1 bis 9.4 ausgebildet sind, unterteilt ist. Dabei ist jedem Schaltelement 9.1 bis 9.4 ein Thema zugeordnet, zu dem jeweils ein Home-Screen, also ein Objekt 14.1 bis 14.4, existiert. Dem Schaltelement 9.1 ist das Thema "Reise", dem Schaltelement 9.2 das Thema "Pause", dem Schaltelement 9.3 das Thema "Arbeit" und dem Schaltelement 9.4 das Thema "Fun" zugeordnet. Dabei müssen die Widget-Objekte, welche jeweils auf den Home-Screens "Pause", "Arbeit" und "Fun" angezeigt werden, nicht unterschiedlich zu den Widget-Objekten 7.1 bis 7.6 des ersten Objekt 14.1 sein. Vielmehr können sich die Home-Screens lediglich in der Anordnung der Widget-Objekte 7.1 bis 7.6 unterscheiden.

Weiterhin wird über dem Bereich 9 eine Leiste 11 mit einer Markierung 11' angezeigt. Dabei befindet sich die Markierung 11' direkt über dem Schaltelement 9.1, welcher auf der Anzeigefläche 4 angezeigt wird.

Betätigt der Nutzer eines der Schaltelemente 9.1 bis 9.2, wird eine Bedienaktion erfasst, mittels welcher ein Themenwechsel herbeigeführt wird.

Beispielsweise betätigt der Nutzer das Schaltelement 9.2. Es wird dann die Anzeigefläche 4 derart angesteuert, dass der Home-Screen, welcher dem Thema "Pause" zugeordnet ist, angezeigt wird. Gleichzeitig springt die Markierung 11' auf die Position direkt über dem Schaltelement 9.2.

Alternativ kann der Wechsel des angezeigten Home-Screens auch automatisch vorgenommen werden, und zwar, wenn vom Fahrzeug 15 ein Wechsel im Betriebsmodus erkannt wird.

Es wird beispielsweise ermittelt, dass der Fahrer eine Reise unternimmt. Das Fahrzeug 15 befindet sich also im Betriebsmodus "Reise". Es wird daher auch der Home-Screen zum Thema "Reise" auf der Anzeigefläche 4 angezeigt.

Der Betriebsmodus kann dabei im Vorfeld vom Fahrer für das Fahrzeug 15 definiert worden sein, so dass diese automatisch erkennt, wann der Betriebsmodus "Reise" vorliegt.

Legt der Nutzer eine Pause ein, so wird ermittelt, dass der Betriebsmodus "Reise" in den Betriebsmodus "Pause" gewechselt hat. Die Anzeigefläche 4 wird derart angesteuert, dass der Home-Screen automatisch vom Thema "Reise" zum Thema "Pause" wechselt.

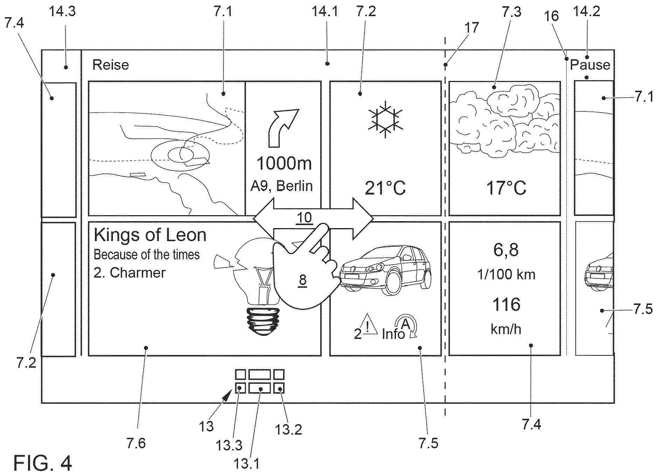

Mit Bezug zur Figur 4 wird ein weiteres Beispiel für eine Anzeige auf der Anzeigefläche 4 erläutert, wie sie von einem Ausführungsbeispiel des erfindungsgemäßen Verfahrens erzeugt werden kann.

Dabei werden angrenzend zu beiden Seiten an das Objekt 14.1 ein zweites Objekt 14.2 und 14.3 angezeigt. Dabei stellt das zweite Objekt 14.2 den Home-Screen zum Thema "Pause" und das zweite Objekt 14.3 den Home-Screen zum Thema "Fun" dar.

Am unteren Rand der Anzeigefläche 4 wird eine schematische Darstellung 13 aller vorhandenen Home-Screens angezeigt. Dabei wird der schematische Home-Screen des ersten Home-Screen in der schematischen Darstellung 13 hervorgehoben dargestellt.

Es wird eine Wischgeste auf der berührungsempfindlichen Oberfläche erfasst, die der Nutzer mit seiner Hand 8 ausführt. Weiterhin wird die Richtung 10 der Wischgeste erfasst, beispielsweise als nach links gerichtet.

Auf der Anzeigefläche 4 wird ein Bildlauf erzeugt, bei dem das Objekt 14.1 nach links aus der Anzeigefläche 4 hinausgeschoben wird. Gleichzeitig wird das teilweise angezeigte Objekt 14.2 ebenso nach links in die Anzeigefläche 4 hineingeschoben.

Überschreitet die linke Begrenzung 16 des Objekts 14.2 eine virtuelle Linie 17 auf der Anzeigefläche 4, so wird auf der Anzeigefläche 4 ein Themenwechsel herbeigeführt. Dies bedeutet, dass beispielsweise die Anzeige auf der Anzeigefläche 4 zu dem Home-Screen des Themas "Pause" springt.

Weiterhin wird auch der nun zur Anzeige gebrachte Home-Screen in der schematischen Darstellung 13 hervorgehoben dargestellt.

Alternativ kann jeder schematisch dargestellte Home-Screen als Schaltelement 13.1 bis 13.3 ausgebildet sein. Das Schaltelement 13.1 des momentan angezeigten Home-Screens des Themas "Reise" wird in der schematischen Darstellung 13 hervorgehoben dargestellt. Durch ein Berühren eines schematischen Home-Screens kann dann der Themenwechsel auf der Anzeigefläche 4 herbeigeführt werden.

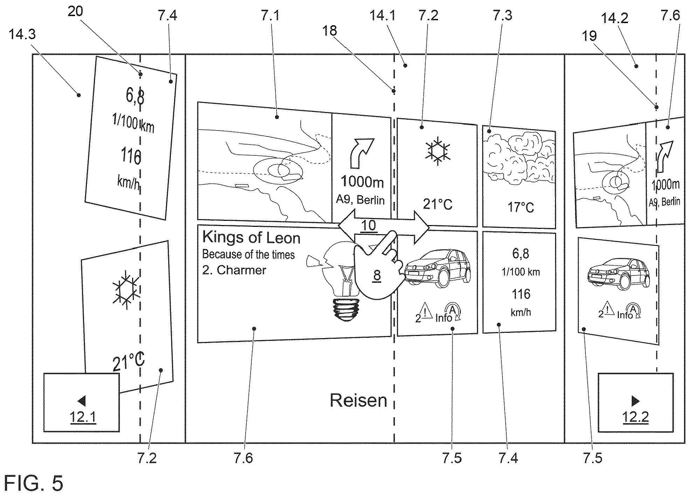

Mit Bezug zu Figur 5 wird ein weiteres Beispiel einer Anzeige angezeigt, wie es von einem weiteren Ausführungsbeispiel des erfindungsgemäßen Verfahrens erzeugt werden kann.

Es wird erfasst, dass die berührungsempfindliche Oberfläche berührt wird.

Daraufhin wird die Anzeigefläche 4 derart angesteuert, dass das Objekt 14.1 perspektivisch um eine Achse 18 um einen ersten Schwenkwinkel geschwenkt angezeigt wird.

Dadurch verkleinert sich zwar die von dem Objekt 14.1 eingenommene Fläche auf der Anzeigefläche 4. Dafür kann jedoch von dem zweiten Objekt 14.2 und dem zweiten Objekt 14.3 auf der Anzeigefläche 4 eingenommene Fläche vergrößert werden.

Das zweite Objekt 14.2 kann dann um die Achse 19 um einen zweiten Schwenkwinkel geschwenkt angezeigt werden, wobei der Wert des zweiten Schwenkwinkels ein anderes Vorzeichen aufweist als der erste Schwenkwinkel. Dadurch kann das zweite Objekt 14.2 optisch von dem ersten Objekt 14.1 abgesetzt werden.

Das zweite Objekt 14.3 kann um eine dritte Achse 20 um einen dritten Schwenkwinkel geschwenkt angezeigt werden, wobei der dritte Schwenkwinkel zwar das gleiche Vorzeichen, jedoch einen anderen Wert als der erste Schwenkwinkel aufweisen kann. Auch das zweite Objekte 14.2 kann dadurch von dem ersten Objekt 14.1 optisch abgesetzt werden.

Weiterhin können sich auf der Anzeigefläche 4 die Schaltelemente 12.1 und 12.2 befinden. Werden diese berührt, kann ein Themenwechsel herbeigeführt werden. Dabei zeigt das Schaltelement 12.1 beispielsweise über einen Pfeil nach links an, dass, wenn es berührt wird, das zweite Objekt 14.3 zur Anzeige gebracht wird. Das Schaltelement 12.2 zeigt beispielsweise über einen Pfeil nach rechts an, dass, wenn es berührt wird, das zweite Objekte 14.2 zur Anzeige gebracht wird.

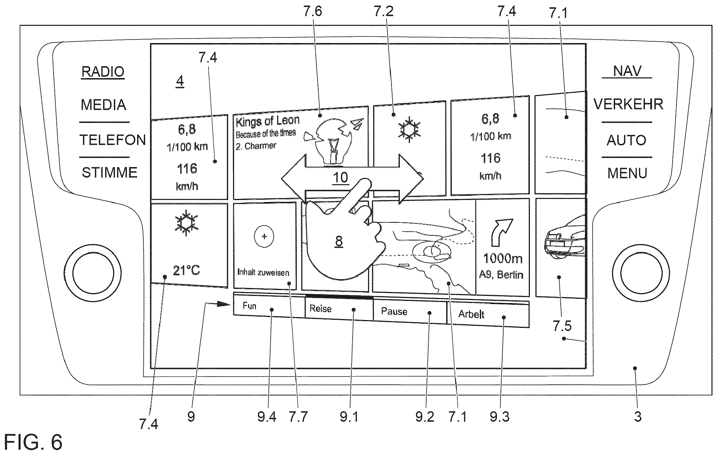

In Figur 6 wird ein Beispiel gezeigt, bei dem die erste 18, zweite 19 und dritte 20 Achse zusammenfallen. Auch der erste, zweite und dritte Schwenkwinkel sind in Figur 6 für das erste Objekt 14.1, das zweite Objekt 14.2 und das dritte Objekt 14.3 gleich. Dadurch ergibt sich auf der Anzeigefläche 4 ein einheitliches perspektivisch dargestelltes Band. Die Widget-Objekte 7.1 bis 7.7 des ersten graphischen Objekts 14.1 können dann hervorgehoben dargestellt werden, so dass dem Nutzer klar dargestellt wird, wo das erste Objekt 14.1 endet und die zweiten Objekte 14.2 und 14.3 beginnen.

Durch eine Wischgeste kann dann wie bereits mit Bezug zu Figur 4 erläutert ein Themenwechsel herbeigeführt werden.

Insbesondere kann bereits eine Bedienabsicht des Nutzers als Bedienaktion erfasst werden, so dass die Anzeigen der Figuren 5 und 6 bereits auf der Anzeigefläche 4 erzeugt werden, wenn noch keine Berührung der berührungsempfindlichen Oberfläche erfasst wurde.

Weiterhin kann der Schwenkwinkel davon abhängig sein, welcher Nutzer, beispielsweise Fahrer oder Beifahrer, die Bedienaktion ausführt, so dass die Anzeige jeweils in Richtung des ausführenden Nutzers geschwenkt werden kann. Auch kann die Schwenkrichtung abhängig von der Richtung 10 einer Wischgeste sein.

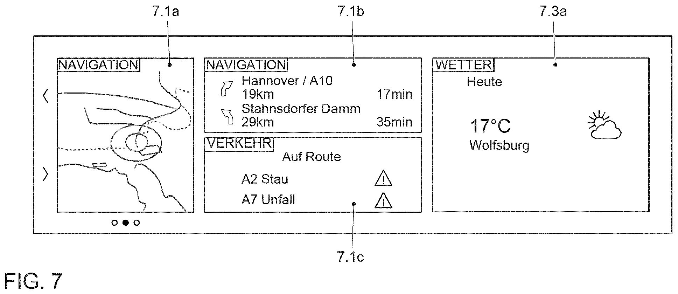

Mit Bezug zu Figur 7 werden Beispiele für Varianten der Widget-Objekte 7.1 und 7.3 gezeigt.

Dabei stellen die Widget-Objekte 7.1', 7.1" und 7.1"' Varianten des Widget-Objekts 7.1 dar. Dabei können die Varianten je nach Thema des Home-Screens zugewiesen werden. Beispielsweise sind für das Thema "Arbeit" keine ausführlichen Informationen zur Navigation notwendig. Dann kann beispielsweise auf dem Home-Screen zum Thema "Arbeit" das Widget-Objekt 7.1' angezeigt werden, welches lediglich eine Einordnung des momentanen Standortes in die Umgebung zeigt.

Die Variante 7.3' für das Widget-Objekt 7.3 kann beispielsweise dem Home-Screen mit dem Thema "Fun" zugeordnet werden. In diesem kann sich der Nutzer immer das Wetter in einer beliebigen Stadt anzeigen lassen.

Varianten sind selbstverständlich auch für die Widget-Objekt 7.2, 7.4, 7.5 und 7.6 denkbar.

Weiterhin wird darauf hingewiesen, dass die beschriebenen Ausführungsbeispiele des Verfahrens beliebig miteinander kombiniert werden können.

Insbesondere kann ein Themenwechsel sowohl manuell vom Nutzer wie auch automatisch vom Fahrzeug 15 herbeigeführt werden. Dabei kann ein automatischer Wechsel des Home-Screens vom Nutzer deaktiviert werden.

### Bezugszeichenliste

- 1: Vorrichtung
- 2.1 - 2.6: Fahrzeugfunktionen
- 3: Anzeigevorrichtung
- 4: Anzeigefläche
- 5: Steuereinheit
- 6: Erfassungseinheit
- 7.1 - 7.6: Widget-Objekte
- 7.1' - 7.1'": Varianten des Widget-Objekts 7.1
- 7.3': Variante des Widget-Objekts 7.3
- 8: Hand
- 9: Bereich
- 9.1 - 9.4: Schaltelemente
- 10: Richtung einer Wischgeste
- 11: Leiste
- 11': Markierung auf der Leiste
- 12.1, 12.2: Schaltelemente
- 13: schematische Darstellung der Home-Screens
- 13.1 - 13.3: Schaltelemente
- 14.1 - 14.4: Objekte
- 15: Fahrzeug
- 16: Begrenzung des Objekts 14.2
- 17: virtuelle Linie
- 18, 19, 20: Achsen
- 21: Ermittlungseinheit

## Patentansprüche

1. Verfahren zum Anzeigen von Informationen in einem Fahrzeug (15), bei dem
zumindest ein erstes Objekt (14.1) zur Wiedergabe von Informationen auf einer Anzeigefläche (4) graphisch dargestellt wird, wobei das erste Objekt (14.1) einem ersten Thema zugeordnet ist,
angrenzend an das erste Objekt (14.1) zumindest teilweise ein zweites Objekt (14.2, 14.3) zur Wiedergabe von Informationen angezeigt wird, welches einem zweiten Thema zugeordnet ist,
erfasst wird, wenn auf der Anzeigefläche (4) ein Themenwechsel von dem ersten Thema zu dem zweiten Thema herbeigeführt wird, und
in Abhängigkeit davon, ob ein Themenwechsel erfasst worden ist, das zweite Objekt (14.2, 14.3) zur Wiedergabe von Informationen vollständig auf der Anzeigefläche (4) graphisch dargestellt wird,
**dadurch gekennzeichnet, dass**
das erste Objekt (14.1) mehrere erste Widget-Objekte (7.1 - 7.6) umfasst, wobei die ersten Widget-Objekte (7.1 - 7.6) dem ersten Thema zugeordnet sind, und
das zweite Objekt (14.2, 14.3) mehrere zweite Widget-Objekte (7.1 - 7.6) umfasst, wobei die zweiten Widget-Objekte (7.1 - 7.6) dem zweiten Thema zugeordnet sind, wobei
das erste Thema einem ersten Betriebsmodus des Fahrzeugs (15) und das zweite Thema einem zweiten Betriebsmodus des Fahrzeugs (15) zugeordnet wird,
ermittelt wird, ob das Fahrzeug (15) von dem ersten in den zweiten Betriebsmodus gewechselt hat, und,
wenn der Betriebsmodus gewechselt hat, der Themenwechsel automatisch herbeigeführt wird.

2. Verfahren nach Anspruch 1,
**dadurch gekennzeichnet, dass**
eine Bedienaktion erfasst wird, wobei der Themenwechsel in Abhängigkeit von der Bedienaktion herbeigeführt wird.

3. Verfahren nach Anspruch 2,
**dadurch gekennzeichnet, dass**
auf der Anzeigefläche zumindest zwei betätigbare Schaltelemente (9.1 - 9.3, 13.3 - 13.3) angezeigt werden, wobei jedes Schaltelement (9.1 - 9.3, 13.3 - 13.3) einem der zwei Themen zugeordnet ist, und
die Bedienaktion für das Schaltelement (9.1 - 9.3, 13.3 - 13.3), welches dem zweiten Thema zugeordnet ist, erfasst wird.

4. Verfahren nach einem der Ansprüche 1 bis 3,
**dadurch gekennzeichnet, dass**
eine Bedienaktion erfasst wird, mit welcher das zumindest teilweise angezeigte zweite Objekt (14.2) ausgewählt wird, wobei mit der Bedienaktion der Themenwechsel herbeigeführt wird.

5. Verfahren nach einem der vorhergehenden Ansprüche,
**dadurch gekennzeichnet, dass**
eine Bedienaktion erfasst wird,
die Bedienaktion eine Wischgeste umfasst, wobei die Richtung (10) der Wischgeste erfasst wird, und
in Abhängigkeit von der erfassten Richtung (10) ein Bildlauf auf der Anzeigefläche (4) erzeugt wird, bei dem das erste Objekt (14.1) in die erfasste Richtung (10) aus der Anzeigefläche (4) hinausgeschoben wird und das zweite Objekt (14.2) in die Anzeigefläche (4) hineingeschoben wird, wobei der Themenwechsel herbeigeführt wird, wenn das zweite Objekt (14.2) eine bestimmte Position auf der Anzeigefläche (4) erreicht hat.

6. Verfahren nach einem der vorhergehende Ansprüche,
**dadurch gekennzeichnet, dass,**
eine Bedienaktion erfasst wird, und,
wenn die Bedienaktion erfasst wurde, das erste Objekte (14.1) perspektivisch oder dreidimensional um eine erste Achse (18) um einen ersten Schwenkwinkel geschwenkt angezeigt wird, wobei das zweite Objekt (14.2, 14.3) perspektivisch oder dreidimensional um eine zweite Achse (19, 20) um einen zweiten Schwenkwinkel geschwenkt angezeigt wird.

7. Verfahren nach einem der vorhergehenden Ansprüche,
**dadurch gekennzeichnet, dass**
auf der Anzeigefläche (4) für jedes der Objekte (14.1 - 14.4) jeweils ein Schaltelement (13.1 - 13.4) in einer schematischen Darstellung (13) der Objekte (14.1 - 14.4) angezeigt wird, wobei das Schaltelement (13.1) für das erste Objekt (14.1) hervorgehoben dargestellt wird,
eine Bedienaktion erfasst wird, mit welcher das Schaltelement (13.2) für das zweite Objekt (14.2 - 14.4) über die schematische Darstellung (13) ausgewählt wird,
der Themenwechsel herbeigeführt wird und
das ausgewählte Schaltelement (13.2) in der schematischen Darstellung (13) hervorgehoben dargestellt wird.

8. Verfahren nach einem der vorhergehenden Ansprüche,
**dadurch gekennzeichnet, dass**
das erste Objekt (14.1) eine erste Hauptanzeige der Anzeigefläche (4) und das zweite Objekt (14.2, 14.3) eine zweite Hauptanzeige der Anzeigefläche (4) darstellt.

9. Vorrichtung (1) zum Anzeigen von Informationen in einem Fahrzeug (15) mit
einer Anzeigevorrichtung (3) mit einer Anzeigefläche (4), wobei auf der Anzeigefläche (4) zumindest ein erstes Objekt (14.1) zur Wiedergabe von Informationen graphisch darstellbar ist, wobei das erste Objekt (14.1) einem Thema zuordenbar ist und angrenzend an das erste Objekt (14.1) zumindest teilweise ein zweites Objekt (14.2) zur Wiedergabe von Informationen anzeigbar ist, welches einem zweiten Thema zugeordnet ist,
einer Erfassungseinheit (6), mittels welcher ein Themenwechsel von dem ersten zu dem zweiten Thema erfassbar ist, und
einer Steuereinheit (5), mittels welcher die Anzeigefläche (4) in Abhängigkeit von dem Themenwechsel derart ansteuerbar ist, dass das zweite Objekt (14.2) vollständig auf der Anzeigefläche (4) graphisch darstellbar ist,
**dadurch gekennzeichnet, dass**
das erste Objekt (14.1) mehrere erste Widget-Objekte (7.1 - 7.6) umfasst, wobei die ersten Widget-Objekte (7.1 - 7.6) dem ersten Thema zugeordnet sind, und
das zweite Objekt (14.2, 14.3) mehrere zweite Widget-Objekte (7.1 - 7.6) umfasst, wobei die zweiten Widget-Objekte (7.1 - 7.6) dem zweiten Thema zugeordnet sind, wobei
dem ersten Thema ein erster Betriebsmodus des Fahrzeugs (15) und dem zweiten Thema ein zweiter Betriebsmodus des Fahrzeugs (15) zuordenbar ist,
die Vorrichtung (1) eine Ermittlungseinheit (21) umfasst, mit welcher ermittelbar ist, ob das Fahrzeug (15) von dem ersten Betriebsmodus in den zweiten Betriebsmodus wechselt, und
das zweite Objekt (14.2) in Abhängigkeit davon automatisch anzeigbar ist, ob der Betriebsmodus von dem ersten in den zweiten Betriebsmodus gewechselt hat.

10. Vorrichtung (1) nach Anspruch 9,
**dadurch gekennzeichnet, dass**
die Erfassungseinheit (6) eine berührungsempfindliche Oberfläche umfasst, die auf der Anzeigefläche (4) angeordnet ist, mittels welcher eine Bedienaktion erfassbar ist, mittels welcher der Themenwechsel herbeiführbar ist.

11. Vorrichtung (1) nach Anspruch 9 oder 10,
**dadurch gekennzeichnet, dass**
die Steuereinheit (5) mit Fahrzeugfunktionen (2.1 - 2.6) koppelbar ist, wobei in den graphischen Objekte (14.1, 14.2) Widget-Objekte (7.1 - 7.6) anzeigbar sind, welche Informationen zu den Fahrzeugfunktionen (2.1 - 2.6) bereitstellen.

12. Fahrzeug mit einer Vorrichtung nach einem der Ansprüche 9 bis 11.

## Claims

1. Method of displaying information in a vehicle (15),
- wherein at least a first object (14.1) for reproducing information is displayed graphically on a display surface (4), and wherein the first object (14.1) is assigned to a first topic,
- wherein a second object (14.2, 14.3) is displayed at least partially adjacent to the first object (14.1) for reproducing information associated with a second topic,
- wherein a change of topic from the first topic to the second topic on the display surface (4) is detected, and
- wherein, depending on whether a topic change has been detected, the second object (14.2, 14.3) for the reproduction of information is graphically displayed fully on the display surface (4),
**characterized in that**
- the first object (14.1) comprises a plurality of first widget objects (7.1 - 7.6), wherein the first widget objects (7.1 - 7.6) are associated with the first topic, and
- the second object (14.2, 14.3) comprises a plurality of second widget objects (7.1 - 7.6), wherein the second widget objects (7.1 - 7.6) are assigned to the second topic, and wherein the first topic corresponds to a first operating mode of the vehicle (15), while the second topic corresponds to a second operating mode of the vehicle (15),
- wherein, whether the vehicle (15) has changed from the first to the second operating mode is determined, and
- if the operating mode has changed, the topic change is automatically effected.

2. Method according to claim 1, **characterized in that** when an operating action is detected, wherein the topic change is effected depending on the operating action.

3. Method according to claim 2, **characterized in that**
- at least two operable switching elements (9.1 - 9.3, 13.3 - 13.3) are displayed on the display surface, wherein each switching element (9.1 - 9.3, 13.3 - 13.3) is assigned to one of the two topics, and
- the operating action assigned to the second topic for the switching element (9.1 - 9.3, 13.3 - 13.3) is detected.

4. Method according to any one of claims 1 to 3, **characterized in that** an operating action is detected, with which the at least partially displayed second object (14.2) is selected, wherein the topic change is effected with the operating action.

5. Method according to any one of the preceding claims, **characterized in that**
- an operating action is detected,
- the operating action comprises a swipe gesture, wherein the direction (10) of the swipe gesture is detected, and
- in response to the detected direction (10), scrolling is produced on the display surface (4), wherein the first object (14.1) in the detected direction (10) is pushed out of the display surface (4), while the second object (14.2) is pushed into the display surface (4), wherein the topic change is effected when the second object (14.2) has reached a certain position on the display surface (4).

6. Method according to one of the preceding claims, **characterized in that**
- an operating action is detected, and
- when the operating action is detected, the first object (14.1) is displayed in perspective or pivoted three-dimensionally about a first axis (18) through a first pivoting angle, wherein the second object (14.2, 14.3) is arranged in a perspective or three-dimensional manner about a second axis (19, 20) and is displayed pivoted through a second pivoting angle.

7. Method according to any one of the preceding claims, **characterized in that**
- a switching element (13.1 -13.4) is displayed respectively in a schematic representation (13) of the objects (14.1 -14.4) on the display surface (4) for each of the objects (14.1 - 14.4), wherein the switching element (13.1) is highlighted for the first object (14.1),
- an operating action is detected with which the switching element (13.2) for the second object (14.2-14.4) is selected via the schematic representation (13),
- the change of topic is effected, and
- the selected switching element (13.2) is highlighted in the schematic representation (13).

8. Method according to any one of the preceding claims, **characterized in that** the first object (14.1) is a first main display on the display surface (4), while the second object (14.2, 14.3) is a second main display on the display surface (4).

9. Device (1) for displaying information in a vehicle (15) with
- a display device (3) with a display surface (4), wherein at least a first object (14.1) for reproducing information may be graphically displayed on the display surface (4), wherein the first object (14.1) may be assigned to a topic and wherein a second object (14.2) for reproducing information is at least partially displayed adjacent to the first object (14.1), which is associated with a second topic,
- a detection unit (6), by means of which a change of topic from the first to the second topic may be detected, and
- a control unit (5) by means of which the display surface (4) may be controlled depending on the topic change in such a way that the second object (14.2) may be represented graphically fully on the display surface (4),
**characterized in that**
- the first object (14.1) comprises a plurality of first widget objects (7.1 - 7.6), wherein the first widget objects (7.1 - 7.6) are associated with the first topic, and
- the second object (14.2, 14.3) comprises a plurality of second widget objects (7.1-7.6), wherein the second widget objects (7.1 - 7.6) are assigned to the second topic,
- the first topic is assigned to a first operating mode of the vehicle (15), while the second topic is assigned to a second operating mode of the vehicle (15),
- the device (1) comprises a determination unit (21), with which it may be determined whether the vehicle (15) changes from the first operating mode to the second operating mode, and
- the second object (14.2) is automatically displayed depending on whether the operating mode has changed from the first to the second operating mode.

10. Device (1) according to claim 9, **characterized in that** the detection unit (6) comprises a touch-sensitive surface which is arranged on the display surface (4), and by means of which an operating action may be detected and by means of which the subject change may be effected.

11. Device (1) according to claim 9 or 10, **characterized in that** the control unit (5) may be coupled with vehicle functions (2.1 - 2.6), wherein widget objects (7.1 - 7.6) are displayed in the graphical objects (14.1, 14.2) to provide information about the vehicle functions (2.1 - 2.6).

12. Vehicle with a device according to one of claims 9 to 11.

## Revendications

1. Procédé d'affichage d'informations dans un véhicule (15), dans lequel
au moins un premier objet (14.1) est représenté graphiquement sur une surface d'affichage (4) pour la reproduction d'informations, le premier objet (14.1) étant affecté à un premier thème,
un deuxième objet (14.2, 14.3) est affiché de façon adjacente au premier objet (14.1) au moins partiellement pour la reproduction d'informations et est affecté à un deuxième thème,
il est détecté quand un changement de thème à partir du premier thème vers le deuxième thème est provoqué sur la surface d'affichage (4), et
le deuxième objet (14.2, 14.3) est représenté graphiquement totalement sur la surface d'affichage (4) pour la reproduction d'informations selon qu'un changement de thème a été ou non détecté,
**caractérisé en ce que**
le premier objet (14.1) comprend plusieurs premiers objets widget (7.1 - 7.6), les premiers objets widget (7.1 - 7.6) étant affectés au premier thème, et
le deuxième objet (14.2, 14.3) comprend plusieurs deuxièmes objets widget (7.1 - 7.6), les deuxièmes objets widget (7.1 - 7.6) étant affectés au deuxième thème,
le premier thème étant affecté à un premier mode de fonctionnement du véhicule (15), et le deuxième thème étant affecté à un deuxième mode de fonctionnement du véhicule (15), il est déterminé si le véhicule (15) a changé pour passer du premier au deuxième mode de fonctionnement, et,
quand le mode de fonctionnement a changé, le changement de thème est automatiquement provoqué.

2. Procédé selon la revendication 1,
**caractérisé en ce**
**qu'**une manipulation est détectée, le changement de thème étant provoqué en fonction de la manipulation.

3. Procédé selon la revendication 2,
**caractérisé en ce**
**qu'**au moins deux éléments de commutation (9.1 - 9.3, 13.3 - 13.3) actionnables sont affichés sur la surface d'affichage, chaque élément de commutation (9.1 - 9.3, 13.3 - 13.3) étant affecté à l'un des deux thèmes, et
la manipulation pour l'élément de commutation (9.1 - 9.3, 13.3 - 13.3) qui est affecté au deuxième thème est détectée.

4. Procédé selon l'une des revendications 1 à 3,
**caractérisé en ce**
**qu'**une manipulation est détectée, avec laquelle le deuxième objet (14.2) affiché au moins partiellement est sélectionné, le changement de thème étant provoqué avec la manipulation.

5. Procédé selon l'une des revendications précédentes,
**caractérisé en ce**
**qu'**une manipulation est détectée,
la manipulation comprend un geste d'effleurement, la direction (10) du geste d'effleurement étant détectée, et
en fonction de la direction (10) détectée, un défilement d'images est produit sur la surface d'affichage (4), au cours duquel le premier objet (14.1) est poussé hors de la surface d'affichage (4) dans la direction (10) détectée, et le deuxième objet (14.2) est attiré dans la surface d'affichage (4), le changement de thème étant provoqué quand le deuxième objet (14.2) a atteint une position définie sur la surface d'affichage (4).

6. Procédé selon l'une des revendications précédentes,
**caractérisé en ce**
**qu'**une manipulation est détectée, et,
quand la manipulation a été détectée, le premier objet (14.1) est affiché, en perspective ou en trois dimensions, en étant pivoté autour d'un premier axe (18) selon un premier angle de pivotement, le deuxième objet (14.2, 14.3) étant affiché, en perspective ou en trois dimensions, en étant pivoté autour d'un deuxième axe (19, 20) selon un deuxième angle de pivotement.

7. Procédé selon l'une des revendications précédentes,
**caractérisé en ce que,**
sur la surface d'affichage (4), pour chacun des objets (14.1 - 14.4), respectivement un élément de commutation (13.1 - 13.4) est affiché dans une représentation schématique (13) des objets (14.1 - 14.4), l'élément de commutation (13.1) pour le premier objet (14.1) étant représenté en étant mis en valeur, une manipulation est détectée, avec laquelle l'élément de commutation (13.2) pour le deuxième objet (14.2, 14.4) est sélectionné par le biais de la représentation schématique (13),
le changement de thème est provoqué et
l'élément de commutation (13.2) sélectionné est représenté dans la représentation schématique (13) en étant mis en valeur.

8. Procédé selon l'une des revendications précédentes,
**caractérisé en ce que**
le premier objet (14.1) représente un premier affichage principal de la surface d'affichage (4), et le deuxième objet (14.2, 14.3) représente un deuxième affichage principal de la surface d'affichage (4).

9. Dispositif (1) d'affichage d'informations dans un véhicule (15) avec
un dispositif d'affichage (3) avec une surface d'affichage (4), au moins un premier objet (14.1) pouvant être représenté graphiquement sur la surface d'affichage (4) pour la reproduction d'informations, le premier objet (14.1) pouvant être affecté à un thème et, de façon adjacente au premier objet (14.1), un deuxième objet (14.2) peut être affiché au moins partiellement pour la reproduction d'informations, lequel est affecté à un deuxième thème,
une unité de détection (6), au moyen de laquelle un changement de thème à partir du premier vers le deuxième thème peut être détecté, et
une unité de commande (5), au moyen de laquelle la surface d'affichage (4) peut être pilotée en fonction du changement de thème de telle sorte que le deuxième objet (14.2) peut être représenté graphiquement totalement sur la surface d'affichage (4),
**caractérisé en ce que**
le premier objet (14.1) comprend plusieurs premiers objets widget (7.1 - 7.6), les premiers objets widget (7.1 - 7.6) étant affectés au premier thème, et
le deuxième objet (14.2, 14.3) comprend plusieurs deuxièmes objets widget (7.1 - 7.6), les deuxièmes objets widget (7.1 - 7.6) étant affectés au deuxième thème,
un premier mode de fonctionnement du véhicule (15) pouvant être affecté au premier thème, et un deuxième mode de fonctionnement du véhicule (15) au deuxième thème,
le dispositif (1) comprend une unité de détermination (21), avec laquelle il est possible de déterminer si le véhicule (15) change pour passer du premier mode de fonctionnement au deuxième mode de fonctionnement, et
le deuxième objet (14.2) peut être affiché automatiquement selon que le mode de fonctionnement a ou non changé pour passer du premier au deuxième mode de fonctionnement.

10. Dispositif (1) selon la revendication 9,
**caractérisé en ce que**
l'unité de détection (6) comprend une surface tactile qui est disposée sur la surface d'affichage (4), au moyen de laquelle une manipulation peut être détectée au moyen de laquelle le changement de thème peut être provoqué.

11. Dispositif (1) selon la revendication 9 ou 10,
**caractérisé en ce que**
l'unité de commande (5) peut être couplée à des fonctions de véhicule (2.1 - 2.6), des objets widget (7.1 - 7.6) pouvant être affichés dans les objets (14.1 - 14.2) graphiques et fournissant des informations sur les fonctions de véhicule (2.1 - 2.6).

12. Véhicule avec un dispositif selon l'une des revendications 9 à 11.
